# EUROPÄISCHE PATENTSCHRIFT

(11) **EP 0 979 313 B1**
(45) Veröffentlichungstag und Bekanntmachung des Hinweises auf die Patenterteilung: **27.10.2004**
(21) Anmeldenummer: 98924146.8
(22) Anmeldetag: 17.04.1998
(51) Int. Cl.: C21B 13/00

(54) **VERFAHREN ZUM THERMISCHEN BEHANDELN VON KÖRNIGEM EISENERZ VOR DER REDUKTION**
METHOD FOR THERMAL TREATMENT OF GRANULATED IRON ORE BEFORE REDUCTION
PROCEDE DE TRAITEMENT THERMIQUE DE MINERAI DE FER GRANULE AVANT REDUCTION

(30) Priorität: 30.04.1997 DE 19718136
(43) Veröffentlichungstag der Anmeldung: 16.02.2000
(73) Patentinhaber: Outokumpu Oyj, 02200 Espoo (FI)
(72) Erfinder: BEYZAVI, Ali, D-60435 Frankfurt am Main (DE); HIRSCH, Martin, D-61381 Friedrichsdorf (DE)
(74) Vertreter: KEIL & SCHAAFHAUSEN
(86) Internationale Anmeldenummer: PCT/EP1998/002298
(87) Internationale Veröffentlichungsnummer: WO 1998/049352

(56) Entgegenhaltungen:
- DE-A- 2 800 211
- DE-A- 4 437 549
- GB-A- 981 231
- GB-A- 1 127 145

## Beschreibung

Die Erfindung betrifft ein Verfahren zum thermischen Behandeln von körnigem, feuchtem Eisenerz, wobei man das Erz durch eine Trocknungszone leitet und wobei das Erz, das mit einer Temperatur im Bereich von 120 bis 400°C aus der Trocknungszone kommt, im direkten Kontakt mit heißem Gas auf Temperaturen von 700 bis 1100°C erhitzt wird, bevor man es einer Reduktionszone aufgibt.

Verfahren dieser Art sind bekannt und zum Beispiel in den US-Patenten 5 527 379, 5 560 762 und 5 603 748 beschrieben. Hierbei dient die thermische Behandlung der Vorbereitung des Erzes für die Aufgabe in einer Reduktionsanlage, die mit einem oder mehreren Wirbelbetten arbeitet. Als Fluidisierungsgas wird wasserstoffreiches Gas verwendet, das als weitere reduzierende Komponente auch noch Kohlenmonoxid enthalten kann. Hierbei hat sich gezeigt, daß Erzanteile mit besonders feiner Körnung den Reduktionsbetrieb stören und die Qualität des Produkts verringern, weil diese feinkörnigen Anteile bevorzugt aus dem Wirbelbett herausgeblasen werden. Dadurch wird ihre Verweilzeit in der Reduktionszone so verringert, daß sie nicht mehr ausreichend reduziert werden.

Die GB-A 1 127 145 offenbart ein Verfahren zur Herstellung von Eisenpulver, bei dem Eisenschlamm nach einer Verdichtung in Kalandern bei 100 bis 150°C getrocknet wird. Anschließend wird das kompakte Agglomerat zermahlen und das zermahlende Pulver in einer Trenneinrichtung so weit aufgeteilt, dass eine gewünschte Partikelgröße für den weiter zu behandelnden Produktstrom erreicht wird. Dieser wird dann auf 1060°C erhitzt und einer Reduktionsstufe zugeführt. Die kleineren Partikel werden recycelt, d. h. wieder dem Eisenschlamm zugeführt, mit diesem verdichtet und dann getrocknet.

Der Erfindung liegt die Aufgabe zugrunde, bei der thermischen Vorbehandlung des eisenhaltigen Erzes oder eines Erzkonzentrates auf verfahrenstechnisch einfache und effiziente Weise sicherzustellen, dass das in die Reduktionszone geführte Erz keine störenden Mengen an Feinkorn aufweist. Erfindungsgemäß wird die Aufgabe beim eingangs genannten Verfahren dadurch gelöst, daß man das aus der Trocknungszone kommende Erz ganz oder teilweise durch eine Trenneinrichtung führt und eine grobkörnige Erzfraktion von einer feinkörnigen Erzfraktion trennt, daß man die feinkörnige Erzfraktion einer Granuliereinrichtung aufgibt und Eisenerzgranulat erzeugt, welches man in die Trocknungszone führt, und daß man die grobkörnige Erzfraktion auf Temperaturen von 700 bis 1100°C erhitzt, bevor man sie in die Reduktionszone leitet. Bei der Trenneinrichtung kann es sich zum Beispiel um ein Sieb oder einen Sichter handeln.

Besonders feinkörniges Erz, das in der Reduktionsanlage unerwünscht ist, entsteht auf mehreren Wegen. Zum einen bildet sich Abrieb während der Trocknung und Erhitzung des körnigen Erzes, auch wird Feinkorn durch Zerspratzen gröberer Körner beim Erhitzen gebildet. Ferner wird das rohe Erz, das für die Reduktion in der Wirbelschicht vorgesehen ist, noch vor dem Trocknen auf die optimale Körnung von etwa 0,1 bis 3 mm zerkleinert. Hierfür können zum Beispiel an sich bekannte Rollenpressen verwendet werden, wobei zwangsläufig jedoch auch Erz mit feinster Körnung entsteht. Diesen Feinkornanteil vor dem Trocknen abzusieben und zu granulieren, wie es zum Beispiel in US 5 560 762 vorgeschlagen wird, löst das Feinkornproblem nicht vollständig, weil Feinkorn auch beim Trocknen und thermischen Vorbehandeln durch Abrieb und Zerspratzen erneut gebildet wird. Durch das erfindungsgemäße Verfahren wird in wirksamer und ökonomischer Weise dafür gesorgt, daß keine störenden Mengen an Feinkorn in die Reduktionsanlage gelangen.

Üblicherweise sorgt man dafür, daß man das aus der Trocknungszone kommende Erz zu mindestens 50% in die Trenneinrichtung führt, um dort die feinkörnige Erzfraktion abzutrennen. Es ist zweckmäßig, in der Trenneinrichtung darauf zu achten, daß die abgetrennte feinkörnige Erzfraktion zu mindestens 80 Gew% Körnungen von höchstens 0,2 mm aufweist. Vorzugsweise wird das aus der Granuliereinrichtung abgezogene Erzgranulat zu mindestens 50 Gew% Körnungen von mindestens 0,3 mm aufweisen. Wird schon vor der Trocknung aus dem rohen Erz eine Feinkornfraktion abgesiebt, so kann man auch dieses rohe Feinerz der vorhandenen Granuliereinrichtung aufgeben. Das rohe Feinerz wird üblicherweise zu mindestens 80 Gew% Körnungen von höchstens 0,2 mm aufweisen.

Das Erz, welches man der Reduktionsanlage aufgibt, wird üblicherweise zu mindestens 80 Gew% aus Körnungen im Bereich von 0,1 bis 3 mm bestehen. Dies empfiehlt sich vor allem dann, wenn die erste Reduktionsstufe als zirkulierende Wirbelschicht ausgebildet ist, wie es bei den bekannten Verfahren der oben genannten US-Patente der Fall ist. In der zirkulierenden Wirbelschicht wird mit relativ hohen Gasgeschwindigkeiten des Fluidisierungs- und Reduktionsgases gearbeitet, die Leerrohrgeschwindigkeiten des Gases liegen üblicherweise im Bereich von 3 bis 10 m/s. Dieser so ausgebildeten ersten Reduktionsstufe folgt zweckmäßigerweise eine zweite Reduktionsstufe, in welcher die Wirbelschicht im Zustand der dichten Phase gehalten wird. Hierbei liegen die Leerrohrgeschwindigkeiten des Fluidisierungs- und Reduktionsgases im Bereich von 0,3 bis 1 m/s.

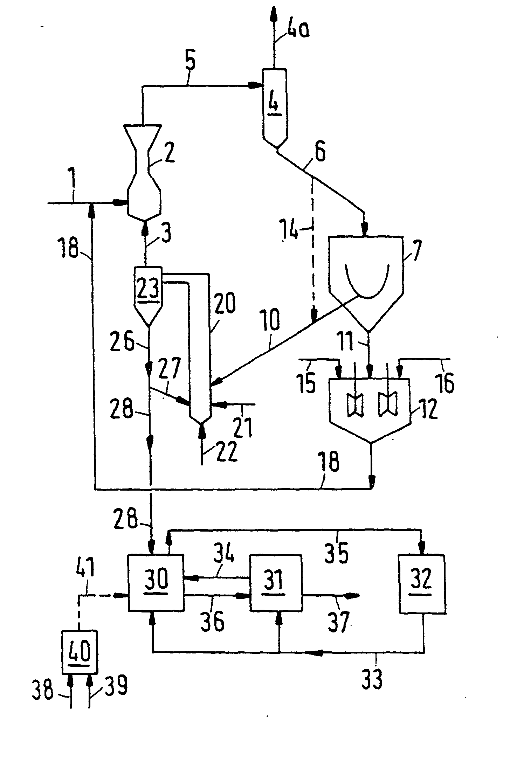

Ausgestaltungsmöglichkeiten des Verfahrens werden mit Hilfe der Zeichnung erläutert, sie zeigt ein Fließschema des Verfahrens.

In der Leitung (1) wird körniges, feuchtes Eisenerz oder auch Erzkonzentrat herangeführt und einem Venturitrockner (2) aufgegeben. Das Erz hat üblicherweise einen Fe-Gehalt von mindestens 60 Gew.%.Das Erz, das zum Beispiel zuvor durch eine nicht dargestellte Zerkleinerungsvorrichtung geführt wurde, weist Körnungen bis höchstens 10 mm vorzugsweise bis höchstens 6 mm auf. Es ist vorteilhaft, wenn mindestens 80 Gew% des Erzes der Leitung (1) Körnungen von höchstens 4 mm haben. Dem Trockner (2) wird heißes Gas durch die Leitung (3) zugeführt, wodurch das Erz nach oben gefördert, getrocknet und durch die Leitung (5) einem Zyklon (4) aufgegeben wird. Wasser und Staub enthaltendes Gas zieht in der Leitung (4a) ab und wird in eine nicht dargestellte Entstaubung geleitet. Getrocknetes Erz, dessen Temperaturen üblicherweise im Bereich von 120 bis 400°C liegen, verläßt den Zyklon (4) durch die Leitung (6) und gelangt in eine Trenneinrichtung, die im vorliegenden Fall als Sichter (7) ausgebildet ist. Die grobkörnige Fraktion verläßt den Sichter (7) durch die Leitung (10) und die feinkörnige Erzfraktion gelangt durch die Leitung (11) zu einem Granulator (12). Wenn man nicht das gesamte getrocknete Erz aus dem Zyklon (4) in den Sichter (7) führen will, kann man eine Teilmenge durch die gestrichelt eingezeichnete Bypass-Leitung (14) direkt der groben Fraktion der Leitung (10) zumischen.

Dem Granulator (12) führt man durch die Leitung (15), falls nötig, Bindemittel, zum Beispiel Bentonit, zu. Ferner kann man dem Granulator durch die Leitung (16) einen Filterkuchen aufgeben, der aus einer nicht dargestellten Gasreinigung stammt und reich an feinkörnigem Eisenerz ist. Der an sich bekannte Granulator (12) erzeugt Eisenerzgranulat, wobei mindestens 50 Gew% des Granulats Körnungen von mindestens 0,3 mm aufweisen. Dieses Granulat wird auf dem Transportweg (18) in den Trockner (2) geführt.

Die grobe Erzfraktion der Leitung (10) wird auf Temperaturen von 700 bis 1100°C und zumeist höchstens 1000°C erhitzt. Hierzu dient eine zirkulierende Wirbelschicht, deren Reaktor (20) man durch die Leitung (21) festen, flüssigen oder gasförmigen Brennstoff und durch die Leitung (22) Luft zuführt. Die heißen Verbrennungsgase fördern die Feststoffe aufwärts zu einem Abscheidezyklon (23), wobei die heißen, staubhaltigen Gase durch die Leitung (3) zum Trockner (2) geführt werden. Das erhitzte grobe Erz verläßt den Zyklon (23) durch die Leitung (26) und wird teilweise durch die Leitung (27) in den unteren Bereich der Kammer (20) zurückgeführt. Das restliche Erz, das durch die Erhitzung gehärtet ist, wird durch die Leitung (28) der Reduktionsanlage zugeführt.

Die in der Zeichnung schematisch dargestellte Reduktionsanlage weist eine erste Reduktionsstufe (30), eine zweite Reduktionsstufe (31) und eine Gasaufbereitung (32) auf. Die erste Stufe (30) arbeitet mit einer zirkulierenden Wirbelschicht und die zweite Reduktionsstufe (31) ist als stationäres Wirbelbett ausgebildet. Einzelheiten einer solchen Reduktionsanlage sind in den US-Patenten 5 527 379, 5 560 762 und 5 603 748 beschrieben. Heißes Reduktionsgas, das neben Wasserstoff auch Kohlenmonoxid enthalten kann, wird in der Leitung (33) herangeführt und als Fluidisierungsgas teilweise der ersten Stufe (30) und der zweiten Stufe (31) zugeführt. Abgas der zweiten Stufe (31) wird durch die Leitung (34) der ersten Stufe (30) aufgegeben. Das die erste Stufe (30) in der Leitung (35) verlassende Abgas, das Wasserdampf und Staub enthält, wird zur Aufbereitung und teilweisen Wiederverwendung zurück in die Anlage (32) geführt, dort wird auch frisches Reduktionsgas erzeugt. Das in der ersten Stufe (30) teilweise reduzierte Erz gelangt durch die Leitung (36) zur weiteren Reduktion in die zweite Stufe (31) und fertiges Produkt wird in der Leitung (37) abgezogen und üblicherweise einer nicht dargestellten Brikettierung und Kühlung zugeführt.

Will man beim Reduzieren auch Kohle verarbeiten, so gibt man feinkörnige Kohle durch die Leitung (38) zusammen mit O₂-haltigem Gas aus der Leitung (39) einer an sich bekannten Kohlevergasungsanlage (40) auf und erzeugt durch Partialoxidation ein H₂ und CO enthaltendes Produktgas. Dieses Produktgas kann man durch die gestrichelt eingezeichnete Leitung (41) ebenfalls in die erste Reduktionsstufe (30) führen.

### Beispiel

In einer der Zeichnung entsprechenden Anlage ohne die Leitung (14) und ohne die Reduktionsanlage wird ein hämatitisches Feinerz mit einem Fe-Gehalt von 68,5 Gew.-% thermisch behandelt.

Das Erz hat einen Wassergehalt von 7 Gew.-%. Pro Stunde gibt man dem Venturitrockner (2) 100 t dieses Erzes auf, das auf Korngrößen kleiner 3 mm zerkleinert worden war. Alle Mengenangaben beziehen sich auf trockene Feststoffe, sofern nichts anderes angegeben ist. Dem Trockner (2) führt man durch die Leitung (3) Gas von 900°C zu, und man gibt ihm durch die Leitung (18) 26 t/h Erzgranulat mit einem Wassergehalt von 8,5 Gew.-% auf. Getrocknetes Erz wird in einer Menge von 126 t/h mit einer Temperatur von 250°C durch die Leitung (5) abgezogen. Der Windsichter (7) wird mit Umluft betrieben, so daß eine Gaszuund -abführung entfüllt. Die grobkörnige Fraktion, die eine untere Korngrenze von 0,1 mm hat, wird in einer Menge von 106,5 t/h durch die Leitung (10) geführt, das feinkörnige Erz wird in einer Menge von 13 t/h dem Granulator (12) zugeführt. Gleichzeitig gibt man dem Granulator 3100 kg/h Wasser, 104 kg/h Bentonit und 11,7 t/h eines Filterkuchens auf. Der Filterkuchen, der aus Gasreinigungen stammt, besteht zu 90 Gew.-% aus Eisenerz und zu 10 Gew.-% aus Wasser. Der Granulator erzeugt 26 t/h Mikropellets mit 8,5 Gew.-% Wasser, einer maximalen Korngröße von 3 mm, einer mittleren Korngröße (d₅₀) von 0,4 mm und mit einem Anteil kleiner 0,1 mm von 5 Gew.-%. Diese Mikropellets gibt man auf dem Transportweg (18) in den Trockner (2).

In den Reaktor (20) leitet man pro Stunde 4536 Nm³ Erdgas und 46600 Nm³ Luft, wodurch im Reaktor eine Temperatur von 900°C herrscht. In der Leitung (28) stehen 106,5 t/h gehärtetes körniges Eisenerz für die Reduktionsanlage bereit.

## Patentansprüche

1. Verfahren zum thermischen Behandeln von körnigem, feuchtem Eisenerz, wobei man das Erz durch eine Trocknungszone leitet, und wobei das Erz, das mit einer Temperatur im Bereich von 120 bis 400°C aus der Trocknungszone kommt, im direkten Kontakt mit heißem Gas auf Temperaturen von 700 bis 1100°C erhitzt wird, bevor man es einer Reduktionszone aufgibt, **dadurch gekennzeichnet, daß** man das aus der Trocknungszone kommende Erz ganz oder teilweise durch eine Trenneinrichtung führt und eine grobkörnige Erzfraktion von einer feinkörnigen Erzfraktion trennt, daß man die feinkörnige Erzfraktion einer Granuliereinrichtung aufgibt und Eisenerzgranulat erzeugt, welches man in die Trocknungszone führt, und daß man die grobkörnige Erzfraktion auf Temperaturen von 700 bis 1100°C erhitzt, bevor man sie in die Reduktionszone leitet.

2. Verfahren nach Anspruch 1, **dadurch gekennzeichnet, daß** man das aus der Trocknungszone kommende Erz zu mindestens 50% in die Trenneinrichtung führt.

3. Verfahren nach Anspruch 1 oder 2, **dadurch gekennzeichnet, daß** das heiße Gas zum Erhitzen der grobkörnigen Erzfraktion durch Verbrennen von festem, flüssigem oder gasförmigem Brennstoff erzeugt wird.

4. Verfahren nach Anspruch 1 oder einem der folgenden, **dadurch gekennzeichnet, daß** man das Eisen enthaltende Erz zunächst zerkleinert, bevor man es in die Trocknungszone leitet.

5. Verfahren nach einem der Ansprüche 1 bis 4, **dadurch gekennzeichnet, daß** die in der Trenneinrichtung abgetrennte feinkörnige Erzfraktion zu mindestens 80 Gew% Körnungen von höchstens 0,2 mm aufweist.

6. Verfahren nach einem der Ansprüche 1 bis 5, **dadurch gekennzeichnet, daß** das aus der Granuliereinrichtung abgezogene Erzgranulat zu mindestens 50 Gew% Körnungen von mindestens 0,3 mm aufweist.

7. Verfahren nach einem der Ansprüche 1 bis 6, **dadurch gekennzeichnet, daß** man Eisen enthaltendes Erz, das zu mindestens 80 Gew% Körnungen von höchstens 0,2 mm aufweist, direkt der Granuliereinrichtung aufgibt.

8. Verfahren nach Anspruch 1 oder einem der folgenden, **dadurch gekennzeichnet, daß** man das auf 700 bis 2100°C erhitzte Eisenerz einer Reduktionsanlage zuführt, die mindestens ein Wirbelbett mit Zufuhr von heißem, reduzierendem Fluidisierungsgas aufweist.

## Claims

1. A process for the thermal treatment of granular, moist iron ore, where the ore is passed through a drying zone, and where the ore, which comes from the drying zone with a temperature in the range from 120 to 400°C, is heated in direct contact with hot gas to temperatures of 700 to 1100°C, before it is charged into a reduction zone, **characterized in that** the ore coming from the drying zone is wholly or partly passed through a separating means, and a coarse-grained ore fraction is separated from a fine-grained ore fraction, that the fine-grained ore fraction is charged into a granulating means and an iron ore granulate is produced, which is introduced into the drying zone, and that the coarse-grained ore fraction is heated to temperatures of 700 to 1100°C, before it is introduced into the reduction zone.

2. The process as claimed in claim 1, **characterized in that** the ore coming from the drying zone is introduced into the separating means for at least 50%.

3. The process as claimed in claim 1 or 2, **characterized in that** the hot gas for heating the coarse-grained ore fraction is produced through combustion of solid, liquid or gaseous fuel.

4. The process as claimed in claim 1 or any of the preceding claims, **characterized in that** the iron-containing ore is first crushed, before it is introduced into the drying zone.

5. The process as claimed in any of claims 1 to 4, **characterized in that** the fine-grained ore fraction separated in the separating means has grain sizes of not more than 0.2 mm for at least 80 wt-%.

6. The process as claimed in any of claims 1 to 5, **characterized in that** the ore granulate withdrawn from the granulating means has grain sizes of at least 0.3 mm for at least 50 wt-%.

7. The process as claimed in any of claims 1 to 6, **characterized in that** iron-containing ore, which has grain sizes of not more than 0.2 mm for at least 80 wt-%, is charged directly into the granulating means.

8. The process as claimed in claim 1 or any of the preceding claims, **characterized in that** the iron ore heated to 700 to 1100°C is supplied to a reduction plant, which has at least one fluidized bed with the supply of hot, reducing fluidizing gas.

## Revendications

1. Procédé à traitement thermique de minerai de fer grené et mouillé, le minerai étant conduit à travers d'une zone de séchage et le minerai arrivant de la zone de séchage à une température entre 120° et 400°C en contact direct avec du gaz chaud étant échauffé à une température entre 700° et 1100° C avant l'introduction duquel dans une zone à réduction,
**caractérisé en ce que** le minerai arrivant de la zone de séchage est mené tout entier or en partie à travers d'un séparateur en séparant une fraction de minera à gros grains d'une fraction à fin grains, que la fraction de minerai à fin grains est introduite à une installation à granuler en générant du minerai de fer granulé menée à la zone de séchage, et que la fraction à gros grains est échauffée à une température de 700° à 1100° C avant l'introduction de laquelle dans la zone à réduction.

2. Procédé selon la revendication 1, **caractérisé en ce qu'**au moins 50% du minerai arrivant de la zone de séchage est mené dans le séparateur.

3. Procédé selon les revendications 1 ou 2, **caractérisé en ce que** le gaz chaud est généré pour échauffer la fraction de minerai à gros grains par combustion de combustible solide, liquide ou gazeux.

4. Procédé selon la revendication 1 ou d'une des revendications suivantes, **caractérisé en ce que** minerai contenant le fer est d'abord fractionné avant l'introduction duquel dans la zone de séchage.

5. Procédé selon l'une des revendications 1 à 4, **caractérisé en ce que** la fraction de minerai à fin grains séparée dans le séparateur comporte à 80 pour cent en poids pour le moins une grainure de 0,2 mm tout au plus.

6. Procédé selon l'une des revendications 1 à 5, **caractérisé en ce que** le granulé de minerai tiré de l'installation à granuler comporte à 50 pour cent en poids pour le moins une grainure d'au moins 0,3 mm.

7. Procédé selon l'une des revendications 1 à 6, **caractérisé en ce que** du minerai contenant de fer comportant à 80 pour cent en poids pour le moins une grainure de 0,2 mm tout au plus, est mené directement à l'installation à granuler.

8. Procédé selon la revendication 1 ou d'une des revendications suivantes, **caractérise en ce,qu'**on mène le minerai de fer échauffé à une température de 700° à 1100°C à un réducteur comportant au moins un lit fluidisé sous 1' amenage de gaz fluidisant chaud et réduisant.
